(19) Europäisches Patentamt
European Patent Office
Office européen des brevets

(11) **EP 4 321 417 B1**

(12) **EUROPEAN PATENT SPECIFICATION**

(45) Date of publication and mention
of the grant of the patent:
**01.07.2026 Bulletin 2026/27**

(21) Application number: **22216757.9**

(22) Date of filing: **27.12.2022**

(51) International Patent Classification (IPC):
**B62D 57/02** (2006.01)     **B62D 57/032** (2006.01)

(52) Cooperative Patent Classification (CPC):
**B62D 57/032;** G05B 2219/45083

(54) **MOTION CONTROL METHOD AND TWO-LEGGED ROBOT**

BEWEGUNGSSTEUERUNGSVERFAHREN UND ZWEIBEINIGER ROBOTER

PROCÉDÉ DE COMMANDE DE MOUVEMENT ET ROBOT À DEUX JAMBES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.08.2022 CN 202210945451**

(43) Date of publication of application:
**14.02.2024 Bulletin 2024/07**

(73) Proprietor: **Beijing Xiaomi Robot Technology Co., Ltd.
Beijing 100176 (CN)**

(72) Inventor: **ZHOU, Mingliang
Beijing 100085 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
**CN-A- 113 050 645     US-A- 4 834 200
US-A- 5 936 367     US-A1- 2005 075 755
US-A1- 2007 168 080     US-A1- 2018 004 208**

**Description**

**TECHNICAL FIELD**

The present invention relates to the field of electronic technologies, and more particularly, to a motion control method and a two-legged robot.

**BACKGROUND**

In the related art, walking gaits of a two-legged robot are generally controlled based on a Linear Inverted Pendulum Model with Double Support Phase (D-LIP). However, when controlling the walking gaits of the two-legged robot, the D-LIP generally considers only a center-of-mass state of the two-legged robot in a Single Support Phase (SSP), and controls the two-legged robot to walk based on the center-of-mass state in the SSP. However, the two-legged robot is not subject only to the SSP when walking. Therefore, when the two-legged robot is controlled to walk only based on the center-of-mass state in the SSP, the two-legged robot may have poor walking stability.

US 2018/0004208 A1 provides a method and a device for controlling a gait of a biped robot. The method includes: selecting gait controlling parameters, and acquiring a movement trajectory of a center of mass when a zero moment point of the biped robot is located within a steady area; obtaining first numerical values of each of the gait controlling parameters of the center of mass and second numerical values of the center of mass; setting a first constraint condition when the step starting phase ends by using the first numerical values, and setting a second constraint condition when the step ending phase starts by using the second numerical values; calculating the movement trajectories of the center of mass in the step starting phase and the step ending phase on the basis of the first constraint condition and the second constraint condition, respectively; and controlling a walking of the biped robot.

US 5 936 367 A provides a gait generation system of a biped mobile robot having a body and two articulated legs each having a foot at its distal end connected by an ankle joint. The system has two or three models approximating a deviation of displacement (position) and velocity of the body and the ZMP indicative of the floor reaction force acting on the robot. In the system, two gaits for a robot walking step are generated. If there is a discontinuity of the body position or velocity or the ZMP in the gait boundary, the models are manipulated to cancel the discontinuity. The output of the models are calculated from the input, and based on the input and output, the gaits are corrected.

US 2005/0075755 A1 provides a gait generation device that includes means for setting a translation floor reaction force's horizontal component (component concerning a friction force) applied to a robot 1, a limitation-target quantity, such as a ZMP, and an allowable range, means for determining at least a provisional instantaneous value of a desired floor reaction force and a provisional instantaneous value for a desired movement of the robot 1, and means that receives at least the provisional instantaneous value for the desired movement and determines a model floor reaction force instantaneous value with the aid of a dynamics model. Based on the difference between the model floor reaction force instantaneous value and the provisional instantaneous value of the desired floor reaction force or the allowable range of the limitation-target quantity, the provisional instantaneous value for the desired movement is corrected.

In US 2007/0168080 A1, a gait generating system for a mobile robot has n dynamic models and determines a first gait parameter defining a desired gait such that the boundary condition of a gait on a first dynamic model is satisfied. The first gait parameter is corrected step by step by using an m-th dynamic model (m: integer satisfying 2<=m<=n), which is each dynamic model other than the first dynamic model, and an m-th gait parameter that satisfies the boundary condition on the m-th dynamic model is determined. The m-th gait parameter is determined by correcting an object of an (m-1)th gait parameter to be corrected on the basis of the degree of deviation of the gait generated on the m-th dynamic model by using the (m-1)th gait parameter from the boundary condition. A final determined n-th gait parameter and an n-th dynamic model are used to generate a desired gait.

US 4 834 200 A provides a method and an apparatus for dynamic walking control of a biped robot including a torso and a pair of legs with feet which, having a much smaller mass than the torso, make it possible to consider the robot as an inverted pendulum. The legs are equipped with actuators by which their length can be expanded or contracted and with actuators for producing swinging torque between each leg and its foot. The walking of the robot is controlled by detecting the angle between each leg and foot, adjusting the length of at least the leg whose foot is in contact with the ground so as to control the height of the center of gravity of the torso to pass along a straight line of predetermined inclination, and applying torque to act about the ankle of the foot in contact with the ground.

CN 113 050 645 A discloses a spring load inverted pendulum model of a biped robot and a gait planning method. The model includes two legs and a mass center, and one ends of the two legs are connected to the mass center; the rigidity of the legs can be adaptively adjusted according to the step length of the biped robot; and the model further includes ankle joints and a foot, and the other ends of the two legs are connected to the foot through the ankle joints respectively.

# EP 4 321 417 B1

## SUMMARY

It is an object of the present invention to provide a motion control method and a two-legged robot that solve the problem of poor walking stability of a two-legged robot in the related art.

This object is achieved by a motion control method according to claim 1, and by a two-legged robot according to claim 10.

According to a first aspect embodiments of the present invention provide a motion control method. The motion control method includes: acquiring gait parameters of a two-legged robot; inputting the gait parameters to a preset gait planning model; determining gait trajectory parameters of the two-legged robot based on the gait parameters through the preset gait planning model, in which the gait trajectory parameters include a center-of-mass state corresponding to a double support phase and a center-of-mass state corresponding to a single support phase, and the center-of-mass state includes a center-of-mass position and a center-of-mass movement speed; and controlling the two-legged robot to move according to the gait trajectory parameters. The gait parameters include a center-of-mass height, a double support phase duration, a single support phase duration, a forward average speed, and a lateral average speed. The center-of-mass state includes a forward center-of-mass position and a forward center-of-mass movement speed. The gait trajectory parameters further include a lateral center-of-mass movement speed of the two-legged robot in a single support phase termination state, a first motion step length of the two-legged robot, and a center-of-mass height of the two-legged robot in a vertical direction.

In a possible implementation, determining gait trajectory parameters of the two-legged robot based on the gait parameters through the preset gait planning model includes: inputting the center-of-mass height and the double support phase duration to the preset gait planning model; determining, through a model corresponding to the single support phase in the preset gait planning model, the forward center-of-mass position and the forward center-of-mass movement speed of the two-legged robot in the single support phase based on the center-of-mass height and a first preset parameter; and determining, through a model corresponding to the double support phase in the preset gait planning model, the forward center-of-mass position and the forward center-of-mass movement speed of the two-legged robot in the double support phase based on the double support phase duration and a second preset parameter.

In a possible implementation, determining gait trajectory parameters of the two-legged robot based on the gait parameters through the preset gait planning model includes: inputting the single support phase duration, the double support phase duration, the forward average speed, and the lateral average speed to the preset gait planning model; determining, through a model corresponding to the single support phase in the preset gait planning model, a forward movement speed and a lateral movement speed of the two-legged robot in the single support phase termination state based on the single support phase duration, the double support phase duration, the forward average speed, and a third preset parameter; determining, through a model corresponding to the double support phase in the preset gait planning model, the first motion step length of the two-legged robot based on the single support phase duration, the double support phase duration, and the forward average speed; and determining the center-of-mass height as the center-of-mass height of the two-legged robot in the vertical direction.

In a possible implementation, the motion control method further includes: acquiring an actual forward movement speed and an actual lateral movement speed of the two-legged robot; determining whether the actual forward movement speed of the two-legged robot is consistent with the forward average speed, and determining whether the actual lateral movement speed is consistent with the lateral average speed; determining a second motion step length of the two-legged robot in response to determining that the actual forward movement speed is inconsistent with the forward average speed and/or that the actual lateral movement speed is inconsistent with the lateral average speed; and controlling the two-legged robot to move based on the second motion step length.

In a possible implementation, determining a second motion step length of the two-legged robot includes: acquiring a forward center-of-mass position and a forward movement speed of the two-legged robot at a current time; inputting the forward center-of-mass position and the forward movement speed of the two-legged robot at the current time, the single support phase duration, the double support phase duration, the forward average speed, and the first motion step length to the preset gait planning model; and determining, through the preset gait planning model, the second motion step length of the two-legged robot based on the forward center-of-mass position and the forward movement speed of the two-legged robot at the current time, the single support phase duration, the double support phase duration, the forward average speed, the first motion step length, and the third preset parameter.

According to a second aspect embodiments of the present invention provide a motion control apparatus. The motion control apparatus includes: a parameter acquisition module configured to acquire gait parameters of a two-legged robot; an input module configured to input the gait parameters to a preset gait planning model; a determination module configured to determine gait trajectory parameters of the two-legged robot based on the gait parameters through the preset gait planning model, in which the gait trajectory parameters include a center-of-mass state corresponding to a double support phase and a center-of-mass state corresponding to a single support phase, and the center-of-mass state includes a center-of-mass position and a center-of-mass movement speed; and a first motion module configured to control the two-legged robot to move according to the gait trajectory parameters.

In a possible implementation, the gait parameters include a center-of-mass height and a double support phase duration; and the center-of-mass state includes a forward center-of-mass position and a forward center-of-mass movement speed.

In a possible implementation, the determination module includes: a first input unit configured to input the center-of-mass height and the double support phase duration to the preset gait planning model; a first determination unit configured to determine, through a model corresponding to the single support phase in the preset gait planning model, the forward center-of-mass position and the forward center-of-mass movement speed of the two-legged robot in the single support phase based on the center-of-mass height and a first preset parameter; and a second determination unit configured to determine, through a model corresponding to the double support phase in the preset gait planning model, the forward center-of-mass position and the forward center-of-mass movement speed of the two-legged robot in the double support phase based on the double support phase duration and a second preset parameter.

In a possible implementation, the gait parameters further include a single support phase duration, a forward average speed, and a lateral average speed; and the gait trajectory parameters further include a lateral center-of-mass movement speed of the two-legged robot in a single support phase termination state, a first motion step length of the two-legged robot, and a center-of-mass height of the two-legged robot in a vertical direction.

In a possible implementation, the determination module includes: a second input unit configured to input the single support phase duration, the double support phase duration, the forward average speed, and the lateral average speed to the preset gait planning model; a third determination unit configured to determine, through a model corresponding to the single support phase in the preset gait planning model, a forward movement speed and a lateral movement speed of the two-legged robot in the single support phase termination state based on the single support phase duration, the double support phase duration, the forward average speed, and a third preset parameter; a fourth determination unit configured to determine, through a model corresponding to the double support phase in the preset gait planning model, the first motion step length of the two-legged robot based on the single support phase duration, the double support phase duration, and the forward average speed; and a fifth determination unit configured to determine the center-of-mass height as the center-of-mass height of the two-legged robot in the vertical direction.

In a possible implementation, the motion control apparatus further includes: a speed acquisition module configured to acquire an actual forward movement speed and an actual lateral movement speed of the two-legged robot; a speed determination module configured to determine whether the actual forward movement speed of the two-legged robot is consistent with the forward average speed, and determine whether the actual lateral movement speed is consistent with the lateral average speed; a step length determination module configured to determine a second motion step length of the two-legged robot in response to determining that the actual forward movement speed is inconsistent with the forward average speed and/or that the actual lateral movement speed is inconsistent with the lateral average speed; and a second motion module configured to control the two-legged robot to move based on the second motion step length.

In a possible implementation, the step length determination module includes: a speed acquisition unit configured to acquire a forward center-of-mass position and a forward movement speed of the two-legged robot at a current time; a third input unit configured to input the forward center-of-mass position and the forward movement speed of the two-legged robot at the current time, the single support phase duration, the double support phase duration, the forward average speed, and the first motion step length to the preset gait planning model; and a sixth determination unit configured to determine, through the preset gait planning model, the second motion step length of the two-legged robot based on the forward center-of-mass position and the forward movement speed of the two-legged robot at the current time, the single support phase duration, the double support phase duration, the forward average speed, the first motion step length, and the third preset parameter.

According to a third aspect embodiments of the present invention provide a controller. The controller includes: a processor; and a memory configured to store instructions executable by the processor, in which the processor is configured to execute the instructions to implement the motion control method.

According to a fourth aspect embodiments of the present invention provide a computer-readable storage medium, in which instructions in the computer-readable storage medium, when executed by a processor of a controller, enable the controller to perform the motion control method according to any one of the possible implementations of the first aspect.

According to a fifth aspect embodiments of the present invention provide a two-legged robot. The two-legged robot includes: a two-legged robot body, and a lower limb assembly and a controller, in which the lower limb assembly and the controller are arranged on the two-legged robot body. The controller is configured to: acquire gait parameters of the two-legged robot; input the gait parameters to a preset gait planning model; determine gait trajectory parameters of the two-legged robot based on the gait parameters through the preset gait planning model, in which the gait trajectory parameters include a center-of-mass state corresponding to a double support phase and a center-of-mass state corresponding to a single support phase, and the center-of-mass state includes a center-of-mass position and a center-of-mass movement speed; and control the lower limb assembly of the two-legged robot to move according to the gait trajectory parameters. The gait parameters include a center-of-mass height, a double support phase duration, a single support phase duration, a forward average speed, and a lateral average speed. The center-of-mass state includes a forward center-of-mass position and a forward center-of-mass movement speed. The gait trajectory parameters further include a lateral center-of-mass movement speed of the two-legged robot in a single support phase termination state, a first motion step length of the two-legged robot, and a center-of-mass height of the two-legged robot in a vertical direction.

According to a sixth aspect embodiments of the present invention provide a computer program product, including a computer program. When the computer program is executed by a processor, the motion control method according to any one of the possible implementations of the first aspect is performed.

The technical solutions according to embodiments of the present invention bring at least the following beneficial effects.

According to embodiments of the present invention, the gait parameters of the two-legged robot are acquired, and the gait parameters are input to the preset gait planning model; the gait trajectory parameters of the two-legged robot are then determined based on the gait parameters through the preset gait planning model, in which the gait trajectory parameters include the center-of-mass state corresponding to the double support phase and the center-of-mass state corresponding to the single support phase, and the center-of-mass state includes the center-of-mass position and the center-of-mass movement speed; and then the two-legged robot is controlled to move according to the gait trajectory parameters. In this way, the two-legged robot can be controlled to move based on the center-of-mass state corresponding to the single support phase in conjunction with the center-of-mass state in the double support phase. Thus, since the two-legged robot is controlled to move by combining the center-of-mass state corresponding to the single support phase with the center-of-mass state corresponding to the double support phase, a motion process of the two-legged robot can be more stable, and the stability of the two-legged robot can be improved, compared with the related art in which the two-legged robot is controlled to walk based only on the center-of-mass state in the single support phase.

## BRIEF DESCRIPTION OF DRAWINGS

The accompanying drawings, which are incorporated into and constitute a part of this specification, illustrate embodiments consistent with the present invention and, together with the specification, serve to explain the principles of the present invention rather than limit the present invention improperly.

FIG. 1 illustrates a flowchart of a motion control method according to an exemplary embodiment.
FIG. 2 illustrates a schematic diagram of a double support phase of a two-legged robot according to an exemplary embodiment.
FIG. 3 illustrates a schematic diagram of a single support phase of a two-legged robot according to an exemplary embodiment.
FIG. 4 illustrates a block diagram of a motion control apparatus according to an exemplary embodiment.
FIG. 5 illustrates a block diagram of a controller according to an exemplary embodiment.

## DETAILED DESCRIPTION

To enable those skilled in the art to better understand technical solutions of the present invention, the technical solutions according to embodiments of the present invention will be described clearly and completely below with reference to the accompanying drawings.

It should be noted that terms such as "first" and "second" in the specification and claims of the present invention and in the foregoing drawings are used for distinguishing between similar objects and not necessarily for describing a particular sequential or chronological order. It should be understood that data thus used is interchangeable in proper circumstances, such that embodiments of the present invention described herein can be implemented in orders except for the orders illustrated or described herein. The implementations described in the following exemplary embodiments do not represent all implementations consistent with the present invention. Instead, they are merely examples of an apparatus and a method consistent with some aspects of the present invention as recited in the appended claims.

A motion control method and apparatus, an electronic device, and a storage medium according to embodiments of the present invention are described in detail below with reference to the accompanying drawings.

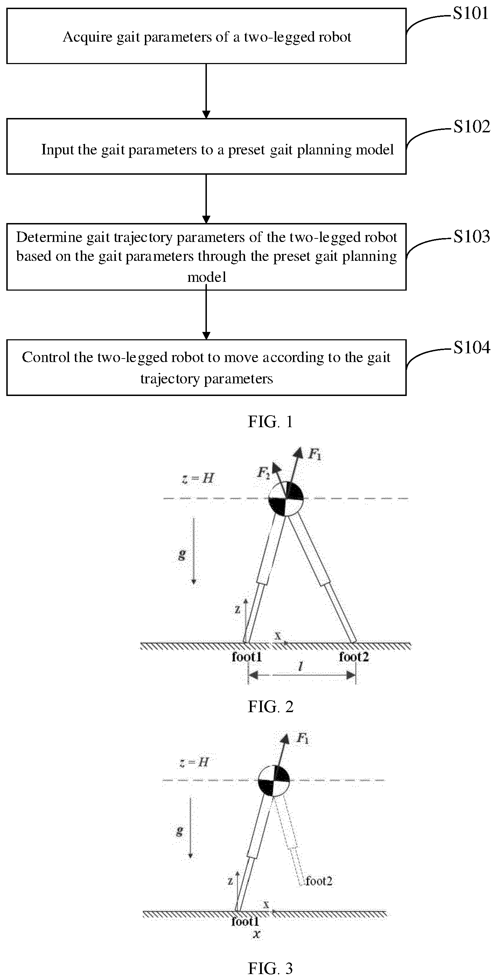

FIG. 1 is a flowchart of a motion control method according to an exemplary embodiment. The motion control method may be applied to a controller of a two-legged robot. As shown in FIG. 1, the motion control method may include the following steps.

In step S101, gait parameters of the two-legged robot are acquired.

According to embodiments of the present invention, when there is a need to control the two-legged robot to move, a user may operate an electronic device realizing a communication connection with the two-legged robot to send the gait parameters to the two-legged robot. The electronic device may also automatically send the gait parameters to the two-legged robot, or the two-legged robot may also generate the gait parameters on its own. Then, the controller may acquire the gait parameters of the two-legged robot.

In a possible implementation, the gait parameters may include a center-of-mass height and a double support phase (DSP) duration. FIG. 2 is a schematic diagram of a DSP of a two-legged robot according to an exemplary embodiment. As shown in FIG. 2, footl and foot2 in FIG. 2 denote two legs of the two-legged robot respectively, g denotes gravitational acceleration, the center-of-mass height may be a height H of the center of mass of the two-legged robot in a direction perpendicular to the ground (i.e., a direction $z$), which is expressed as $z=H$ in FIG. 2. The DSP is a phase in which the two legs of the two-legged robot are both in contact with the ground. The DSP duration may be a contact duration each time the two legs of the two-legged robot are both in contact with the ground. The two-legged robot realizes walking by switching the two legs between a single support phase (SSP) and the DSP.

In step S102, the gait parameters are input to a preset gait planning model.

According to embodiments of the present invention, after the gait parameters of the two-legged robot are acquired, the gait parameters may be input to the preset gait planning model. The preset gait planning model may be a liner inverted pendulum model with double support phase (D-LIP), which may be a preset model configured to perform processing based on the gait parameters of the two-legged robot to obtain gait trajectory parameters of the two-legged robot. For example, kinematics analysis may be performed based on the gait parameters of the two-legged robot to obtain the gait trajectory parameters. The gait trajectory parameters are a data basis for controlling the two-legged robot to walk.

In step S103, the gait trajectory parameters of the two-legged robot are determined based on the gait parameters through the preset gait planning model.

The gait trajectory parameters include a center-of-mass state corresponding to the DSP and a center-of-mass state corresponding to the SSP. The center-of-mass state includes a center-of-mass position and a center-of-mass movement speed. FIG. 3 is a schematic diagram of the SSP of a two-legged robot according to an exemplary embodiment. As shown in FIG. 3, the SSP is a phase in which one leg of the two-legged robot is in contact with the ground.

According to embodiments of the present invention, after the gait parameters are input to the preset gait planning model, the gait trajectory parameters of the two-legged robot may be determined based on the gait parameters of the two-legged robot through the preset gait planning model. For example, the preset gait planning model may be controlled to perform kinematics analysis on the gait parameters to output the gait trajectory parameters of the two-legged robot.

In a possible implementation, the center-of-mass state may include a forward center-of-mass position and a forward center-of-mass movement speed. That is, the gait trajectory parameters include a forward center-of-mass position and a forward center-of-mass movement speed corresponding to the DSP and a center-of-mass position and a center-of-mass movement speed corresponding to the SSP.

In step S104, the two-legged robot is controlled to move according to the gait trajectory parameters.

According to embodiments of the present invention, after the gait trajectory parameters of the two-legged robot are determined based on the gait parameters through the preset gait planning model, the two-legged robot may be controlled to move according to the gait trajectory parameters. For example, the two-legged robot may be controlled to move according to the gait trajectory parameters through a workspace control method. For example, the workspace control method may include, but is not limited to, a whole-body motion control method, an inverse dynamics control, an inverse kinematics control method, and the like.

According to embodiments of the present invention, the gait parameters of the two-legged robot are acquired, and the gait parameters are input to the preset gait planning model; the gait trajectory parameters of the two-legged robot are then determined based on the gait parameters through the preset gait planning model, in which the gait trajectory parameters include the center-of-mass state corresponding to the DSP and the center-of-mass state corresponding to the SSP, and the center-of-mass state includes the center-of-mass position and the center-of-mass movement speed; and then the two-legged robot is controlled to move according to the gait trajectory parameters. In this way, the two-legged robot can be controlled to move by combining the center-of-mass state in the DSP based on the center-of-mass state corresponding to the SSP. Thus, since the two-legged robot is controlled to move by combining the center-of-mass state corresponding to the SSP with the center-of-mass state corresponding to the DSP, a motion process of the two-legged robot can be more stable, and the stability of the two-legged robot can be improved, compared with the related art in which the two-legged robot is controlled to walk based on the center-of-mass state in the SSP.

In a possible implementation, when the gait parameters include a center-of-mass height and a DSP duration and the center-of-mass state includes a forward center-of-mass position and a forward center-of-mass movement speed, a specific implementation of determining gait trajectory parameters of the two-legged robot based on the gait parameters through the preset gait planning model in step S103 may be as follows: inputting the center-of-mass height and the DSP duration to the preset gait planning model; determining, through a model corresponding to the SSP in the preset gait planning model, the forward center-of-mass position and the forward center-of-mass movement speed of the two-legged robot in the SSP based on the center-of-mass height and a first preset parameter; and determining, through a model corresponding to the DSP in the preset gait planning model, the forward center-of-mass position and the forward center-of-mass movement speed of the two-legged robot in the DSP based on the DSP duration and a second preset parameter.

According to embodiments of the present invention, when the gait trajectory parameters of the two-legged robot are determined based on the gait parameters through the preset gait planning model, the center-of-mass height and the DSP duration may be input to the preset gait planning model, and through the model corresponding to the SSP and the model corresponding to the DSP in the preset gait planning model, the forward center-of-mass position and the forward center-of-mass movement speed of the two-legged robot in the SSP and the forward center-of-mass position and the forward center-of-mass movement speed of the two-legged robot in the DSP are determined based on the center-of-mass height and the first preset parameter and based on the DSP duration and the second preset parameter respectively. It may be understood that the preset gait planning model may include the model corresponding to the SSP (as shown in FIG. 3) and the model corresponding to the DSP (as shown in FIG. 2). The model corresponding to the SSP may be configured to determine the forward center-of-mass position and the forward center-of-mass movement speed of the two-legged robot in the SSP based on the center-of-mass height and the first preset parameter. The model corresponding to the DSP may be configured to determine the forward center-of-mass position and the forward center-of-mass movement speed of the two-legged robot in the DSP based on the DSP duration and the second preset parameter.

Exemplarily, when the forward center-of-mass position and the forward center-of-mass movement speed of the two-legged robot in the SSP is determined based on the center-of-mass height and the first preset parameter through the preset gait planning model, a force analysis may be performed based on the center-of-mass height through the model corresponding to the SSP. Specifically, as shown in FIG. 3, to keep the center-of-mass height of the two-legged robot constant, foot1 is subjected to ground force F1, which is applied to the center-of-mass position of the two-legged robot along a leg length direction. A Z-component force of F1 is identically equal to gravity m·g, in which g denotes the gravitational acceleration and m denotes mass of the two-legged robot, and the force analysis is performed accordingly. Taking a support leg foot1 as a coordinate origin, an X-direction (i.e., forward) center-of-mass dynamics equation is:

$$\ddot{x} = \lambda^2 x, \text{ where}$$

$$\lambda = \sqrt{\frac{g}{H}} \tag{1}$$

in which $\ddot{x}$ denotes X-direction acceleration of the two-legged robot in the SSP, $x$ denotes an X-direction position of the two-legged robot in the SSP, H denotes the center-of-mass height of the two-legged robot, and g denotes the gravitational acceleration.

An analytical solution to the above motion equation (1) is:

$$\begin{cases} x(t) = c_1 e^{\lambda t} + c_2 e^{-\lambda t} \\ \dot{x}(t) = \lambda\left(c_1 e^{\lambda t} - c_2 e^{-\lambda t}\right) \end{cases} \tag{2}$$

in which $x(t)$ denotes an X-direction center-of-mass position of the two-legged robot in the SSP, $x(t)$ denotes an X-direction movement speed of the two-legged robot in the SSP, and $c_1$ and $c_2$ denote preset parameters (i.e., the first preset parameter).

If $[x_s^+, \dot{x}_s^+]$ denotes a center-of-mass state at SSP start time $t_s^+$, that is, an X-direction center-of-mass position and an X-direction center-of-mass movement speed, in which the subscript "s" denotes the SSP,

$$\begin{cases} c_1 = \frac{1}{2}\left(x_s^+ + \frac{1}{\lambda}\dot{x}_s^+\right) \\ c_2 = \frac{1}{2}\left(x_s^+ - \frac{1}{\lambda}\dot{x}_s^+\right) \end{cases} \tag{3}$$

in which $x_s^+$ denotes the X-direction center-of-mass position at the SSP start time $t_s^+$, and $\dot{x}_s^+$ denotes the X-direction center-of-mass movement speed at the SSP start time $t_s^+$.

Moreover, $[x_s^+, \dot{x}_s^+]$ satisfies the following relation:

$$\begin{cases} \dot{x}_s^+ = -\sigma x_s^+ \\ \dot{x}_s^- = \sigma x_s^- \end{cases}, \text{ where}$$

$$\sigma = \lambda \coth\left(\frac{T_s \lambda}{2}\right)$$

(4)

in which $T_s$ denotes the SSP duration.

Exemplarily, when the forward center-of-mass position and the forward center-of-mass movement speed of the two-legged robot in the DSP are determined based on the DSP duration and the second preset parameter through the preset gait planning model, a force analysis may be performed based on the center-of-mass height through the model corresponding to the DSP. Specifically, referring to FIG. 2, a DSP stage may be regarded as an action transition stage between a swing leg and a support leg. Assuming that a transition time (duration of the DSP) is $T_d$, in which the subscript "d" denotes the DSP, since the center-of-mass height is generally expected to remain constant during the DSP, in consideration of physical realizability, a transition curve of support force between two legs of the two-legged robot may be designed to ensure smooth acceleration changes during the DSP, as shown by the following equation:

$$\begin{cases} F_{z1} = mg\left(1 - \frac{t}{T_d}\right) \\ F_{z2} = \frac{mgt}{T_d} \end{cases}$$

(5)

in which $F_{z1}$ and $F_{z2}$ denote Z-direction components of force of an original support leg (footl) and an original swing leg (foot2) of the two-legged robot on the center of mass of the two-legged robot respectively, $T_d$ denotes the DSP duration, g denotes the gravitational acceleration, and m denotes the mass of the two-legged robot.

The force analysis is performed with the original support leg footl as a coordinate origin and a constant center-of-mass height, and an X-direction center-of-mass dynamics equation of the two-legged robot in the DSP stage is:

$$\ddot{x} = \lambda^2 \left(x - \frac{l}{T_d} t\right), \text{ where}$$

$$\lambda = \sqrt{\frac{g}{H}}$$

(6)

in which $\ddot{x}$ denotes an X-direction acceleration of the two-legged robot in the DSP stage, $T_d$ denotes the DSP duration, x denotes an X-direction position of the two-legged robot in the DSP, *l* denotes a motion step length of the two-legged robot (the step length is a set step length, i.e., a first motion step length), that is, displacement of foot2 relative to footl in the direction X in FIG. 2.

Similarly, an analytical solution to the ordinary differential equation (6) may be obtained, i.e., a DSP kinematics equation:

$$\begin{cases} x(t) = c_3 e^{\lambda t} + c_4 e^{-\lambda t} + \frac{l}{T_d} t \\ \dot{x}(t) = \lambda\left(c_3 e^{\lambda t} - c_4 e^{-\lambda t}\right) + \frac{l}{T_d} \end{cases}$$

(7)

in which *x(t)* denotes an X-direction center-of-mass position of the two-legged robot in the DSP, *x(t)* denotes an X-direction movement speed of the two-legged robot in the DSP, and $c_3$ and $c_4$ denote preset parameters (i.e., the second preset parameter).

If $\left[x_d^+, \dot{x}_d^+\right]$ denotes a center-of-mass state at DSP start time, that is, an X-direction center-of-mass position and an X-direction center-of-mass movement speed at the DSP start time,

$$\begin{cases} c_3 = \dfrac{1}{2}\left(x_d^+ + \dfrac{1}{\lambda}\dot{x}_d^+ - \dfrac{l}{\lambda T_d}\right) \\ c_4 = \dfrac{1}{2}\left(x_d^+ - \dfrac{1}{\lambda}\dot{x}_d^+ + \dfrac{l}{\lambda T_d}\right) \end{cases} \tag{8}$$

in which $T_d$ denotes the DSP duration, $x_d^+$ denotes the X-direction center-of-mass position at the DSP start time, and $\dot{x}_d^+$ denotes the X-direction center-of-mass movement speed at the DSP start time.

It may be understood that, during the motion of the two-legged robot, a state transition may occur between the SSP and the DSP. A mapping relation of the center-of-mass states during the transition may be as follows: *l* denotes a motion step length of the two-legged robot.

$$\Delta_{s \to d} \;:\; \begin{cases} \dot{x}_d^+ = \dot{x}_s^- \\ x_d^+ = x_s^- \end{cases} \tag{9a}$$

$$\Delta_{d \to s} \;:\; \begin{cases} \dot{x}_s^+ = \dot{x}_d^- \\ x_s^+ = x_d^- - l \end{cases} \tag{9b}$$

in which $\Delta_{s \to d}$ denotes switching from the SPP to the DSP, $\Delta_{d \to s}$ denotes switching from the DSP to the SPP, *l* denotes the first motion step length of the two-legged robot, $x_d^+$ denotes a center-of-mass position at the DSP start time, $\dot{x}_d^+$ denotes a center-of-mass movement speed at the DSP start time, $x_s^-$ denotes a center-of-mass position at SSP end time, $\dot{x}_s^-$ denotes a movement speed at the SSP end time, $\dot{x}_s^+$ denotes a movement speed at the SSP start time, $x_s^+$ denotes a center-of-mass position at the SSP start time, $\dot{x}_d^-$ denotes a center-of-mass movement speed at DSP end time, and $x_d^-$ denotes a center-of-mass position at the DSP end time.

In this way, the forward center-of-mass positions and the forward center-of-mass movement speeds corresponding to the two-legged robot in different support phases can be determined based on the gait parameters through the models respectively corresponding to the SSP and the DSP. In this way, the accuracy of the determined center-of-mass states can be improved by determining gait center-of-mass states in different situations based on different models. At the same time, since the above models are obtained based on an actual force analysis, the gait trajectory parameters output by the models may also be more in line with the physical reality, and a smooth center-of mass-motion trajectory at an acceleration level can be generated.

In some possible implementations, the gait parameters may further include an SSP duration, a forward average speed, and a lateral average speed; and the gait trajectory parameters may further include a lateral center-of-mass movement speed of the two-legged robot in an SSP termination state, a first motion step length of the two-legged robot, and a center-of-mass height of the two-legged robot in a vertical direction.

Correspondingly, a specific implementation of determining gait trajectory parameters of the two-legged robot based on the gait parameters through the preset gait planning model in step S103 may be as follows: inputting the SSP duration, the DSP duration, the forward average speed, and the lateral average speed to the preset gait planning model; determining, through a model corresponding to the SSP in the preset gait planning model, a forward movement speed and a lateral movement speed of the two-legged robot in an SSP termination state based on the SSP duration, the DSP duration, the forward average speed, and a third preset parameter; determining, through a model corresponding to the DSP in the preset gait planning model, the first motion step length of the two-legged robot based on the SSP duration, the DSP duration, and the forward average speed; and determining the center-of-mass height as the center-of-mass height of the two-legged robot in the vertical direction.

According to embodiments of the present invention, the SSP duration, the DSP duration, the forward average speed, and the lateral average speed may be input to the preset gait planning model, and then the forward movement speed and the lateral movement speed of the two-legged robot in the SSP termination state is determined based on the SSP duration, the DSP duration, the forward average speed, and the third preset parameter through the model corresponding to the SSP in the preset gait planning model.

Exemplarily, when the center-of-mass height H, the SSP duration, and the DSP duration are given, each average speed has a unique limit cycle orbit (also known as a "gait") corresponding thereto, and the forward movement speed in the SSP termination state is:

$$\dot{x}_s^{-*} = \frac{T_s + T_d}{\mu + \frac{2}{\sigma}} v_x \quad , \text{where} \tag{10}$$

$$\mu = \mu(H, T_s, T_d)$$

$$= \frac{2\lambda T_d}{e^{\lambda T_d} - e^{-\lambda T_d}} \left( \frac{2}{\sigma} + \frac{1}{2} \left( \frac{1}{\sigma} + \frac{1}{\lambda} - \frac{2}{\sigma \lambda T_d} \right) \left( e^{\lambda T_d} - 1 \right) \right. \tag{11}$$

$$\left. + \frac{1}{2} \left( \frac{1}{\sigma} - \frac{1}{\lambda} + \frac{2}{\sigma \lambda T_d} \right) \left( e^{-\lambda T_d} - 1 \right) \right)$$

in which $\dot{x}_s^{-*}$ denotes the forward (X-direction) movement speed in the SSP termination state, $\sigma$ denotes the third preset parameter, $T_s$ denotes the SSP duration, $T_d$ denotes the DSP duration, and $v_x$ denotes the forward average speed.

For a Y-direction (lateral) motion, a Y-direction movement speed $\dot{y}_s^{-*}$ in the SSP termination state is:

$$\dot{y}_s^{-*} = \frac{T_s + T_d}{\mu + \frac{2}{\sigma}} v_y \pm \frac{W \lambda \sinh(\lambda T_s)}{2 + 2\cosh(\lambda T_s)} \tag{12}$$

in which $\dot{y}_s^{-*}$ denotes the Y-direction movement speed in the SSP termination state, $T_s$ denotes the SSP duration, $T_d$ denotes the DSP duration, $v_y$ denotes the lateral average speed, W denotes a desired walking width when the Y-direction movement speed is 0 (the value may be a preset value), and $\sigma$ denotes the third preset parameter.

Exemplarily, when a desired motion step length, i.e., the first motion step length, of the two-legged robot in the DSP is determined based on the SSP duration, the DSP duration, and the forward average speed, the first motion step length of the two-legged robot may be determined by combining formulas (9a), (9b), and (11). A specific calculation manner thereof may be as follows:

$$l^* = x_s^- + \frac{1}{\sigma} \dot{x}_s^- + \mu \dot{x}_s^- \tag{13}$$

in which $l^*$ denotes the first motion step length, $x_s^-$ denotes the center-of-mass position at the SSP end time, $\dot{x}_s^-$ denotes the center-of-mass movement speed at the SSP end time, and $\sigma$ denotes the third preset parameter.

Exemplarily, the center-of-mass height in the gait parameters may be determined to be the center-of-mass height of the two-legged robot in the vertical direction (direction z), and the center-of-mass height in the gait parameters may be determined to be a z-direction center-of-mass height in the gait trajectory parameters. That is, a motion trajectory of the center of mass of the two-legged robot in the direction Z is z(t) = H. It may be understood that, in the SSP stage, a trajectory of the swing leg of the two-legged robot is required to meet the following conditions. 1. During the swing in the direction Z, the swing leg leaves the ground at time t=0, rises to a specified height near t=0.5 Ts, and falls to the ground at time t=$T_s$. 2. During the swing in the direction X, the swing leg is located at the position of the DSP end time at the time t=0, and runs to the first motion step length l* determined by (13) at the time t=$T_s$.

In this way, more abundant gait trajectory parameters of the two-legged robot in lateral and vertical directions can be determined by combining different gait parameters, so as to improve comprehensiveness and accuracy of the gait trajectory parameters and further improve the stability of the two-legged robot.

In some possible implementations, the motion of the two-legged robot may also be adjusted according to an actual motion speed of the two-legged robot. Correspondingly, a specific implementation may be as follows: acquiring an actual forward movement speed and an actual lateral movement speed of the two-legged robot; determining whether the actual forward movement speed of the two-legged robot is consistent with the forward average speed, and determining whether the actual lateral movement speed is consistent with the lateral average speed; determining a second motion step length of the two-legged robot when the actual forward movement speed is inconsistent with the forward average speed and/or the actual lateral movement speed is inconsistent with the lateral average speed; and controlling the two-legged robot to move based on the second motion step length.

According to embodiments of the present invention, the two-legged robot may be subjected to external disturbances during the motion, resulting in changes in an actual desired motion speed of the two-legged robot (including at least one of the forward average speed and the lateral average speed in the above gait parameters). Therefore, in consideration of the above, after the two-legged robot is controlled to move based on the gait trajectory parameters, the actual forward movement speed and the actual lateral movement speed of the two-legged robot may also be monitored in real time or periodically. If at least one of the actual forward movement speed and the actual lateral movement speed is inconsistent with the corresponding average speed, for example, the actual forward movement speed is inconsistent with the forward average speed, or the actual lateral movement speed is inconsistent with the lateral average speed, or the actual forward movement speed is inconsistent with the forward average speed and the actual lateral movement speed is inconsistent with the lateral average speed, in this case, the walking length of the two-legged robot during the motion, that is, the second motion step length, can be re-determined, and the two-legged robot is controlled to move according to the second motion step length. In this way, the motion of the two-legged robot is adjusted according to actual motion of the two-legged robot, so that the motion of the two-legged robot is more in line with an actual requirement, thereby further improving the stability of the two-legged robot.

In a further possible implementation, a specific implementation of determining a second motion step length of the two-legged robot in the above step may be as follows: acquiring a forward center-of-mass position and a forward movement speed of the two-legged robot at a current time; inputting the forward center-of-mass position and the forward movement speed of the two-legged robot at the current time, the SSP duration, the DSP duration, the forward average speed, and the first motion step length to the preset gait planning model; and determining, through the preset gait planning model, the second motion step length of the two-legged robot based on the forward center-of-mass position and the forward movement speed of the two-legged robot at the current time, the SSP duration, the DSP duration, the forward average speed, the first motion step length, and the third preset parameter.

According to embodiments of the present invention, when the second motion step length of the two-legged robot is determined, the forward center-of-mass position and the forward movement speed of the two-legged robot at the current time may be acquired, and then the forward center-of-mass position and the forward movement speed of the two-legged robot at the current time, the SSP duration, the DSP duration, the forward average speed, and the first motion step length are input to the preset gait planning model. Then, the preset gait planning model may be controlled to perform kinematics analysis on the forward center-of-mass position and the forward movement speed of the two-legged robot at the current time, the SSP duration, the DSP duration, the forward average speed, and the third preset parameter, so as to output a new desired motion step length of the two-legged robot, that is, the second motion step length.

Exemplarily, the preset gait planning model may calculate a new forward movement speed $\dot{x}_s^{-*}$ in the SSP termination state at the current time through the above formula (10) based on the SSP duration, the DSP duration, and the forward average speed. Moreover, the forward center-of-mass position and the forward movement speed at the current time may be determined to be new $[x(t), x(t)]$ of the two-legged robot, that is, a forward center-of-mass position and a forward movement speed at the current time. Then, a forward movement speed $\dot{x}_s^{-\#}$ of the center of mass when the swing leg of the two-legged robot lands may be predicted in real time according to the forward center-of-mass position and the forward movement speed at the current time. A predictor formula of $\dot{x}_s^{-\#}$ may be Formula (14). Then, a new walking length of the two-legged robot in a current situation, i.e., the second motion step length, may be determined through Formula (15) by combining $\dot{x}_s^{-\#}$, the first motion step length *l**, and a preset parameter K.

$$\dot{x}_s^{-\#} = \lambda \sinh\left(\lambda(T_s - t)\right)x(t) + \cosh\left(\lambda(T_s - t)\right)\dot{x}(t) \qquad (14)$$

in which $\dot{x}_s^{-\#}$ denotes the real-time predicted forward movement speed of the center of mass when the swing leg of the two-legged robot lands, $T_s$ denotes the SSP duration, and H denotes the center-of-mass height.

$$l^d = l^* + K(\dot{x}_s^{-\#} - \dot{x}_s^{-*}) \qquad (15)$$

in which $l^d$ denotes the second motion step length, *l** denotes the first motion step length, $\dot{x}_s^{-\#}$ denotes the real-time predicted forward movement speed of the center of mass when the swing leg of the two-legged robot lands, $\dot{x}_s^{-*}$ denotes the forward movement speed in the SSP termination state at the current time. Moreover, K denotes a gain coefficient, and a specific value may be adjusted according to a desired speed tracking effect and an actual situation of the two-legged robot.

In this way, the motion step length of the two-legged robot may be adjusted according to actual motion of the two-legged robot, so that the motion of the two-legged robot is more in line with an actual requirement, and motion stability of the two-legged robot and robustness against external interference can be further improved. At the same time, by combining the above formulas, it can be seen that the gait trajectory parameters of this embodiment can be obtained by an analytical solution, and the calculation time is low, so online adjustment of the gait trajectory parameters can be realized, and a variable center-of-mass height and a variable walking speed of the two-legged robot can be realized.

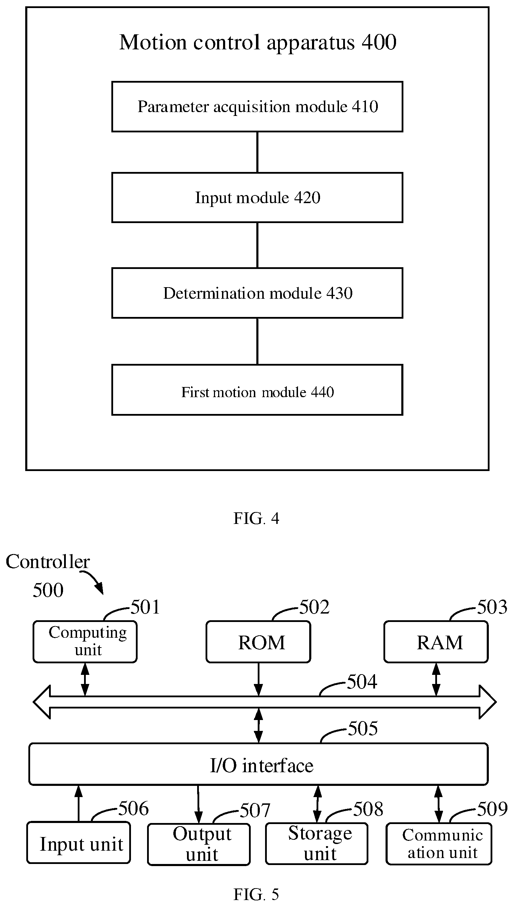

Based on the same invention concept, an embodiment of the present invention further provides a motion control apparatus. As shown in FIG. 4, FIG. 4 is a block diagram of a motion control apparatus according to an exemplary embodiment. Referring to FIG. 4, the motion control apparatus 400 may include: a parameter acquisition module 410 configured to acquire gait parameters of a two-legged robot; an input module 420 configured to input the gait parameters to a preset gait planning model; a determination module 430 configured to determine gait trajectory parameters of the two-legged robot based on the gait parameters through the preset gait planning model, in which the gait trajectory parameters include a center-of-mass state corresponding to a DSP and a center-of-mass state corresponding to an SSP, and the center-of-mass state includes a center-of-mass position and a center-of-mass movement speed; and a first motion module 440 configured to control the two-legged robot to move according to the gait trajectory parameters.

In a possible implementation, the gait parameters include a center-of-mass height and a DSP duration; and the center-of-mass state includes a forward center-of-mass position and a forward center-of-mass movement speed.

In a possible implementation, the determination module 430 includes: a first input unit configured to input the center-of-mass height and the DSP duration to the preset gait planning model; a first determination unit configured to determine, through a model corresponding to the SSP in the preset gait planning model, the forward center-of-mass position and the forward center-of-mass movement speed of the two-legged robot in the SSP based on the center-of-mass height and a first preset parameter; and a second determination unit configured to determine, through a model corresponding to the DSP in the preset gait planning model, the forward center-of-mass position and the forward center-of-mass movement speed of the two-legged robot in the DSP based on the DSP duration and a second preset parameter.

In a possible implementation, the gait parameters further include an SSP duration, a forward average speed, and a lateral average speed; and the gait trajectory parameters further include a lateral center-of-mass movement speed of the two-legged robot in an SSP termination state, a first motion step length of the two-legged robot, and a center-of-mass height of the two-legged robot in a vertical direction.

In a possible implementation, the determination module 430 includes: a second input unit configured to input the SSP duration, the DSP duration, the forward average speed, and the lateral average speed to the preset gait planning model; a third determination unit configured to determine, through a model corresponding to the SSP in the preset gait planning model, a forward movement speed and a lateral movement speed of the two-legged robot in an SSP termination state based on the SSP duration, the DSP duration, the forward average speed, and a third preset parameter; a fourth determination unit configured to determine, through a model corresponding to the DSP in the preset gait planning model, the first motion step length of the two-legged robot based on the SSP duration, the DSP duration, and the forward average speed; and a fifth determination unit configured to determine the center-of-mass height as the center-of-mass height of the two-legged robot in the vertical direction.

In a possible implementation, the motion control apparatus 400 further includes: a speed acquisition module configured to acquire an actual forward movement speed and an actual lateral movement speed of the two-legged robot; a speed determination module configured to determine whether the actual forward movement speed of the two-legged robot is consistent with the forward average speed, and determine whether the actual lateral movement speed is consistent with the lateral average speed; a step length determination module configured to determine a second motion step length of the two-legged robot when the actual forward movement speed is inconsistent with the forward average speed and/or the actual lateral movement speed is inconsistent with the lateral average speed; and a second motion module configured to control the two-legged robot to move based on the second motion step length.

In a possible implementation, the step length determination module includes: a speed acquisition unit configured to acquire a forward center-of-mass position and a forward movement speed of the two-legged robot at a current time; a third input unit configured to input the forward center-of-mass position and the forward movement speed of the two-legged robot at the current time, the SSP duration, the DSP duration, the forward average speed, and the first motion step length to the preset gait planning model; and a sixth determination unit configured to determine, through the preset gait planning model, the second motion step length of the two-legged robot based on the forward center-of-mass position and the forward movement speed of the two-legged robot at the current time, the SSP duration, the DSP duration, the forward average speed, the first motion step length, and the third preset parameter.

Regarding the motion control apparatus in the above embodiment, specific manners in which the modules perform operations have been described according to embodiments of the method, and will not be elaborated herein.

Based on the same invention concept, an embodiment of the present invention further provides a two-legged robot, including: a two-legged robot body, and a lower limb assembly and a controller, in which the lower limb assembly and the controller are arranged on the two-legged robot body. The controller is configured to: acquire gait parameters of the two-legged robot; input the gait parameters to a preset gait planning model; determine gait trajectory parameters of the two-legged robot based on the gait parameters through the preset gait planning model, in which the gait trajectory parameters include a center-of-mass state corresponding to a DSP and a center-of-mass state corresponding to an SSP, and the center-of-mass state includes a center-of-mass position and a center-of-mass movement speed; and control the lower limb assembly of the two-legged robot to move according to the gait trajectory parameters.

In a possible implementation, the gait parameters include a center-of-mass height and a DSP duration; and the center-of-mass state includes a forward center-of-mass position and a forward center-of-mass movement speed.

In a possible implementation, the controller is further configured to: input the center-of-mass height and the DSP duration to the preset gait planning model; determine, through a model corresponding to the SSP in the preset gait planning model, the forward center-of-mass position and the forward center-of-mass movement speed of the two-legged robot in the SSP based on the center-of-mass height and a first preset parameter; and determine, through a model corresponding to the DSP in the preset gait planning model, the forward center-of-mass position and the forward center-of-mass movement speed of the two-legged robot in the DSP based on the DSP duration and a second preset parameter.

In a possible implementation, the gait parameters further include an SSP duration, a forward average speed, and a lateral average speed; and the gait trajectory parameters further include a lateral center-of-mass movement speed of the two-legged robot in an SSP termination state, a first motion step length of the two-legged robot, and a center-of-mass height of the two-legged robot in a vertical direction.

In a possible implementation, the controller is further configured to: input the SSP duration, the DSP duration, the forward average speed, and the lateral average speed to the preset gait planning model; determine, through a model corresponding to the SSP in the preset gait planning model, a forward movement speed and a lateral movement speed of the two-legged robot in an SSP termination state based on the SSP duration, the DSP duration, the forward average speed, and a third preset parameter; determine, through a model corresponding to the DSP in the preset gait planning model, the first motion step length of the two-legged robot based on the SSP duration, the DSP duration, and the forward average speed; and determine the center-of-mass height as the center-of-mass height of the two-legged robot in the vertical direction.

In a possible implementation, the controller is further configured to: acquire an actual forward movement speed and an actual lateral movement speed of the two-legged robot; determine whether the actual forward movement speed of the two-legged robot is consistent with the forward average speed, and determining whether the actual lateral movement speed is consistent with the lateral average speed; determine a second motion step length of the two-legged robot when the actual forward movement speed is inconsistent with the forward average speed and/or the actual lateral movement speed is inconsistent with the lateral average speed; and control the lower limb assembly of the two-legged robot to move based on the second motion step length.

In a possible implementation, the controller is further configured to: acquire a forward center-of-mass position and a forward movement speed of the two-legged robot at a current time; input the forward center-of-mass position and the forward movement speed of the two-legged robot at the current time, the SSP duration, the DSP duration, the forward average speed, and the first motion step length to the preset gait planning model; and determine, through the preset gait planning model, the second motion step length of the two-legged robot based on the forward center-of-mass position and the forward movement speed of the two-legged robot at the current time, the SSP duration, the DSP duration, the forward average speed, the first motion step length, and the third preset parameter.

Regarding the two-legged robot in the above embodiments, specific manners in which the structures perform operations have been described according to embodiments of the method, and will not be elaborated herein.

According to embodiments of the present invention, the present invention further provides a controller, a readable storage medium, and a computer program product.

FIG. 5 is a schematic block diagram of an exemplary controller 500 that may be configured to implement embodiments of the present invention. The controller 500 is intended to represent various forms of digital computers, such as laptops, desktops, workbenches, personal digital assistants, servers, blade servers, mainframe computers, and other suitable computers. The controller may further represent various forms of mobile devices, such as personal digital assistants, cellular phones, smart phones, wearable devices, and other similar computing devices. The components, their connections and relationships, and their functions shown herein are examples only, and are not intended to limit the implementation of the present invention as described and/or required herein.

As shown in FIG. 5, the controller 500 includes a computing unit 501, which may perform various suitable actions and processing according to a computer program stored in a read-only memory (ROM) 502 or a computer program loaded from a storage unit 508 into a random access memory (RAM) 503. The RAM 503 may also store various programs and data required to operate the controller 500. The computing unit 501, the ROM 502 and the RAM 503 are coupled to one another by a bus 504. An input/output (I/O) interface 505 may also be coupled to the bus 504.

A plurality of components in the controller 500 are coupled to the I/O interface 505, including an input unit 506, such as a keyboard and a mouse; an output unit 507, such as various types of displays and speakers; a storage unit 508, such as disks and discs; and a communication unit 509, such as a network card, a modem, and a wireless communication transceiver. The communication unit 509 allows the controller 500 to exchange information/data with other devices over computer networks such as the Internet and/or various telecommunications networks.

The computing unit 501 may be a variety of general-purpose and/or special-purpose processing components with processing and computing capabilities. Some examples of the computing unit 501 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller or microcontroller, etc. The computing unit 501 performs the methods and processing described above, such as the motion control method. For example, in some embodiments, the motion control method may be implemented as a computer software program that is tangibly embodied in a machine-readable medium, such as the storage unit 508. In some embodiments, part or all of a computer program may be loaded and/or installed on the controller 500 via the ROM 502 and/or the communication unit 509. One or more steps of the motion control method described above may be performed when the computer program is loaded into the RAM 503 and executed by the computing unit 501. Alternatively, in other embodiments, the computing unit 501 may be configured to perform the motion control method by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor, which may be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the method in the present invention may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present invention, the computer-readable storage medium may be a tangible medium which may include or store programs for use by or in conjunction with an instruction execution system, apparatus or device. The computer-readable storage medium may be a machine-readable signal medium or machine-readable storage medium. The computer-readable storage medium may include, but is not limited to, electronic, magnetic, optical, electromagnetic, infrared, or semiconductor systems, apparatuses or devices, or any suitable combinations thereof. More specific examples of the computer-readable storage medium may include electrical connections based on one or more wires, a portable computer disk, a hard disk, an RAM, an ROM, an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, voice input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation schema of the systems and technologies described here), or a computing system including any combination of such background components, middleware components or front-end components. The components of the system can be coupled to each other through any form or medium of digital data communication (e.g., a communication network). Examples of the communication network include: a local area network (LAN), a wide area network (WAN), the Internet, and a blockchain network.

The computer system may include a client and a server. The client and the server are generally far away from each other and generally interact via the communication network. A relationship between the client and the server is generated through computer programs that run on a corresponding computer and have a client-server relationship with each other. The server may be a cloud server, also known as a cloud computing server or cloud host, which is a host product in the cloud computing service system to solve the problems of difficult management and weak business scalability in the traditional physical host and a Virtual Private Server (VPS). The server may also be a distributed system server, or a server combined with blockchain.

It should be understood that the steps can be reordered, added, or deleted using the various forms of processes shown above. For example, the steps described in the present invention may be executed in parallel or sequentially or in different sequences, provided that desired results of the technical solutions disclosed in the present invention are achieved, which is not limited herein.

**Claims**

1.   A motion control method, comprising:

acquiring gait parameters of a two-legged robot (S101);
inputting the gait parameters to a preset gait planning model (S102);
determining gait trajectory parameters of the two-legged robot based on the gait parameters through the preset gait planning model (S103), wherein the gait trajectory parameters comprise a center-of-mass state corresponding to a double support phase and a center-of-mass state corresponding to a single support phase, and the center-of-mass state comprises a center-of-mass position and a center-of-mass movement speed; and
controlling the two-legged robot to move according to the gait trajectory parameters (S104),
wherein
the gait parameters comprise a center-of-mass height, a double support phase duration, a single support phase duration, a forward average speed, and a lateral average speed;
the center-of-mass state comprises a forward center-of-mass position and a forward center-of-mass movement speed; and
the gait trajectory parameters further comprise a lateral center-of-mass movement speed of the two-legged robot in a single support phase termination state, a first motion step length of the two-legged robot, and a center-of-mass height of the two-legged robot in a vertical direction.

2.   The motion control method according to claim 1, wherein determining gait trajectory parameters of the two-legged robot based on the gait parameters through the preset gait planning model (S103) comprises:

inputting the center-of-mass height and the double support phase duration to the preset gait planning model;
determining, through a model corresponding to the single support phase in the preset gait planning model, the forward center-of-mass position and the forward center-of-mass movement speed of the two-legged robot in the single support phase based on the center-of-mass height and a first preset parameter; and
determining, through a model corresponding to the double support phase in the preset gait planning model, the forward center-of-mass position and the forward center-of-mass movement speed of the two-legged robot in the double support phase based on the double support phase duration and a second preset parameter,
wherein the first preset parameter is a parameter used in an analytical solution to a forward center-of-mass dynamics equation of the two-legged robot; and
the second preset parameter is a parameter used in an analytical solution to the forward center-of-mass dynamics equation in the double support phase.

3.   The motion control method according to claim 1, wherein determining gait trajectory parameters of the two-legged robot based on the gait parameters through the preset gait planning model (S103) comprises:

inputting the single support phase duration, the double support phase duration, the forward average speed, and the lateral average speed to the preset gait planning model;
determining, through a model corresponding to the single support phase in the preset gait planning model, a forward movement speed and a lateral movement speed of the two-legged robot in the single support phase termination state based on the single support phase duration, the double support phase duration, the forward average speed, and a third preset parameter;
determining, through a model corresponding to the double support phase in the preset gait planning model, the first motion step length of the two-legged robot based on the single support phase duration, the double support phase duration, and the forward average speed; and
determining the center-of-mass height as the center-of-mass height of the two-legged robot in the vertical direction,
wherein the third preset parameter a parameter used for calculating the forward movement speed in the single support phase termination state.

4. The motion control method according to any one of claims 1 to 3, further comprising:

acquiring an actual forward movement speed and an actual lateral movement speed of the two-legged robot;
determining whether the actual forward movement speed of the two-legged robot is consistent with the forward average speed, and determining whether the actual lateral movement speed is consistent with the lateral average speed;
determining a second motion step length of the two-legged robot in response to determining that the actual forward movement speed is inconsistent with the forward average speed and/or that the actual lateral movement speed is inconsistent with the lateral average speed; and
controlling the two-legged robot to move based on the second motion step length.

5. The motion control method according to claim 4, wherein determining a second motion step length of the two-legged robot comprises:

acquiring a forward center-of-mass position and a forward movement speed of the two-legged robot at a current time;
inputting the forward center-of-mass position and the forward movement speed of the two-legged robot at the current time, the single support phase duration, the double support phase duration, the forward average speed, and the first motion step length to the preset gait planning model; and
determining, through the preset gait planning model, the second motion step length of the two-legged robot based on the forward center-of-mass position and the forward movement speed of the two-legged robot at the current time, the single support phase duration, the double support phase duration, the forward average speed, the first motion step length, and the third preset parameter.

6. A computer-readable storage medium, wherein instructions in the computer-readable storage medium are executed by a processor of a controller and enable the controller to perform the motion control method according to any one of claims 1 to 5.

7. A computer program product, comprising a computer program, wherein the motion control method according to any one of claims 1 to 5 is implemented in response to executing the computer program by a processor.

8. A two-legged robot, comprising:

a two-legged robot body, a lower limb assembly and a controller, the lower limb assembly and the controller being arranged on the two-legged robot body,
wherein the controller is configured to:

acquire gait parameters of the two-legged robot;
input the gait parameters to a preset gait planning model;
determine gait trajectory parameters of the two-legged robot based on the gait parameters through the preset gait planning model, wherein the gait trajectory parameters comprise a center-of-mass state corresponding to a double support phase and a center-of-mass state corresponding to a single support phase, and the center-of-mass state comprises a center-of-mass position and a center-of-mass movement speed; and
control the lower limb assembly of the two-legged robot to move according to the gait trajectory parameters,

wherein
the gait parameters comprise a center-of-mass height, a double support phase duration, a single support phase duration, a forward average speed, and a lateral average speed;
the center-of-mass state comprises a forward center-of-mass position and a forward center-of-mass movement speed; and
the gait trajectory parameters further comprise a lateral center-of-mass movement speed of the two-legged robot in a single support phase termination state, a first motion step length of the two-legged robot, and a center-of-mass height of the two-legged robot in a vertical direction.

9. The two-legged robot according to claim 8, wherein the controller is further configured to:

input the center-of-mass height and the double support phase duration to the preset gait planning model;
determine, through a model corresponding to the single support phase in the preset gait planning model, the forward center-of-mass position and the forward center-of-mass movement speed of the two-legged robot in the single support phase based on the center-of-mass height and a first preset parameter; and
determine, through a model corresponding to the double support phase in the preset gait planning model, the forward center-of-mass position and the forward center-of-mass movement speed of the two-legged robot in the double support phase based on the double support phase duration and a second preset parameter,
wherein the first preset parameter is a parameter used in an analytical solution to a forward center-of-mass dynamics equation of the two-legged robot; and
the second preset parameter is a parameter used in an analytical solution to the forward center-of-mass dynamics equation in the double support phase.

10. The two-legged robot according to claim 8, wherein the controller is further configured to:

input the single support phase duration, the double support phase duration, the forward average speed, and the lateral average speed to the preset gait planning model;
determine, through a model corresponding to the single support phase in the preset gait planning model, a forward movement speed and a lateral movement speed of the two-legged robot in the single support phase termination state based on the single support phase duration, the double support phase duration, the forward average speed, and a third preset parameter;
determine, through a model corresponding to the double support phase in the preset gait planning model, the first motion step length of the two-legged robot based on the single support phase duration, the double support phase duration, and the forward average speed; and
determine the center-of-mass height as the center-of-mass height of the two-legged robot in the vertical direction, wherein the third preset parameter a parameter used for calculating the forward movement speed in the single support phase termination state.

11. The two-legged robot according to any one of claims 8 to 10, wherein the controller is further configured to:

acquire an actual forward movement speed and an actual lateral movement speed of the two-legged robot;
determine whether the actual forward movement speed of the two-legged robot is consistent with the forward average speed, and determining whether the actual lateral movement speed is consistent with the lateral average speed;
determine a second motion step length of the two-legged robot in response to determining that the actual forward movement speed is inconsistent with the forward average speed and/or that the actual lateral movement speed is inconsistent with the lateral average speed; and
control the two-legged robot to move based on the second motion step length.


## Patentansprüche

1. Ein Bewegungssteuerungsverfahren, das folgende Schritte aufweist:

Erfassen von Gangparametern eines zweibeinigen Roboters (S101);
Eingeben der Gangparameter in ein voreingestelltes Gangplanungsmodell (S102);
Bestimmen von Gangbahnparametern des zweibeinigen Roboters basierend auf den Gangparametern durch das voreingestellte Gangplanungsmodell (S103), wobei die Gangbahnparameter einen Masseschwerpunktzustand, der einer Doppelunterstützungsphase entspricht, und einen Masseschwerpunktzustand aufweisen, der einer Einzelunterstützungsphase entspricht, und der Masseschwerpunktzustand eine Masseschwerpunktposition und eine Masseschwerpunktbewegungsgeschwindigkeit aufweist; und
Steuern des zweibeinigen Roboters, damit sich derselbe gemäß den Gangbahnparametern bewegt (S104), wobei
die Gangparameter eine Masseschwerpunkthöhe, eine Doppelunterstützungsphasendauer, eine Einzelunterstützungsphasendauer, eine Vorwärts-Durchschnittsgeschwindigkeit und eine Seitwärts-Durchschnittsgeschwindigkeit aufweisen;
der Masseschwerpunktzustand eine Vorwärts-Masseschwerpunktposition und eine Vorwärts-Masseschwerpunktbewegungsgeschwindigkeit aufweist; und
die Gangbahnparameter ferner eine Seitwärts-Schwerpunktbewegungsgeschwindigkeit des zweibeinigen Roboters in einem Einzelunterstützungsphasenbeendigungszustand, eine erste Bewegungsschrittlänge des zweibeinigen Roboters und eine Masseschwerpunkthöhe des zweibeinigen Roboters in einer vertikalen Richtung aufweisen.

2. Das Bewegungssteuerungsverfahren gemäß Anspruch 1, wobei das Bestimmen von Gangbahnparametern des zweibeinigen Roboters basierend auf den Gangparametern durch das voreingestellte Gangplanungsmodell (S103) folgende Schritte aufweist:

Eingeben der Masseschwerpunkthöhe und der Doppelunterstützungsphasendauer in das voreingestellte Gangplanungsmodell;
Bestimmen, durch ein Modell, das der Einzelunterstützungsphase in dem voreingestellten Gangplanungsmodell entspricht, der Vorwärts-Masseschwerpunktposition und der Vorwärts-Masseschwerpunktbewegungsgeschwindigkeit des zweibeinigen Roboters in der Einzelunterstützungsphase basierend auf der Masseschwerpunkthöhe und einem ersten voreingestellten Parameter; und
Bestimmen, durch ein Modell, das der Doppelunterstützungsphase in dem voreingestellten Gangplanungsmodell entspricht, der Vorwärts-Masseschwerpunktposition und der Vorwärts-Masseschwerpunktbewegungsgeschwindigkeit des zweibeinigen Roboters in der Doppelunterstützungsphase basierend auf der Doppelunterstützungsphasendauer und einem zweiten voreingestellten Parameter,
wobei der erste voreingestellte Parameter ein Parameter ist, der in einer analytischen Lösung für eine Vorwärts-Masseschwerpunktdynamikgleichung des zweibeinigen Roboters verwendet wird; und
der zweite voreingestellte Parameter ein Parameter ist, der in einer analytischen Lösung für die Vorwärts-Masseschwerpunktdynamikgleichung in der Doppelunterstützungsphase verwendet wird.

3. Das Bewegungssteuerungsverfahren gemäß Anspruch 1, wobei das Bestimmen von Gangbahnparametern des zweibeinigen Roboters basierend auf den Gangparametern durch das voreingestellte Gangplanungsmodell (S103) folgende Schritte aufweist:

Eingeben der Einzelunterstützungsphasendauer, der Doppelunterstützungsphasendauer, der Vorwärts-Durchschnittsgeschwindigkeit und der Seitwärts-Durchschnittsgeschwindigkeit in das voreingestellte Gangplanungsmodell;
Bestimmen, durch ein Modell, das der Einzelunterstützungsphase in dem voreingestellten Gangplanungsmodell entspricht, einer Vorwärtsbewegungsgeschwindigkeit und einer Seitwärts-Bewegungsgeschwindigkeit des zweibeinigen Roboters in dem Einzelunterstützungsphasenbeendigungszustand basierend auf der Einzelunterstützungsphasendauer, der Doppelunterstützungsphasendauer, der Vorwärts-Durchschnittsgeschwindigkeit und einem dritten voreingestellten Parameter;
Bestimmen, durch ein Modell, das der Doppelunterstützungsphase in dem voreingestellten Gangplanungsmodell entspricht, der ersten Bewegungsschrittlänge des zweibeinigen Roboters basierend auf der Einzelunterstützungsphasendauer, der Doppelunterstützungsphasendauer und der Vorwärts-Durchschnittsgeschwindigkeit; und
Bestimmen der Masseschwerpunkthöhe als die Masseschwerpunkthöhe des zweibeinigen Roboters in der vertikalen Richtung,
wobei der dritte voreingestellte Parameter ein Parameter ist, der zum Berechnen der Vorwärtsbewegungsgeschwindigkeit in dem Einzelunterstützungsphasenbeendigungszustand verwendet wird.

4. Das Bewegungssteuerungsverfahren gemäß einem der Ansprüche 1 bis 3, das ferner folgende Schritte aufweist:

Erfassen einer tatsächlichen Vorwärtsbewegungsgeschwindigkeit und einer tatsächlichen Seitwärts-Bewegungsgeschwindigkeit des zweibeinigen Roboters;
Bestimmen, ob die tatsächliche Vorwärtsbewegungsgeschwindigkeit des zweibeinigen Roboters mit der Vorwärts-Durchschnittsgeschwindigkeit übereinstimmt, und Bestimmen, ob die tatsächliche Seitwärts-Bewegungsgeschwindigkeit mit der Seitwärts-Durchschnittsgeschwindigkeit übereinstimmt;
Bestimmen einer zweiten Bewegungsschrittlänge des zweibeinigen Roboters ansprechend auf das Bestimmen, dass die tatsächliche Vorwärtsbewegungsgeschwindigkeit nicht mit der Vorwärts-Durchschnittsgeschwindigkeit übereinstimmt und/oder dass die tatsächliche Seitwärts-Bewegungsgeschwindigkeit nicht mit der Seitwärts-Durchschnittsgeschwindigkeit übereinstimmt; und
Steuern des zweibeinigen Roboters, damit sich derselbe basierend auf der zweiten Bewegungsschrittlänge bewegt.

5. Das Bewegungssteuerungsverfahren gemäß Anspruch 4, wobei das Bestimmen einer zweiten Bewegungsschrittlänge des zweibeinigen Roboters folgende Schritte aufweist:

Erfassen einer Vorwärts-Masseschwerpunktposition und einer Vorwärtsbewegungsgeschwindigkeit des zweibeinigen Roboters zu einem aktuellen Zeitpunkt;

Eingeben der Vorwärts-Masseschwerpunktposition und der Vorwärtsbewegungsgeschwindigkeit des zweibeinigen Roboters zu dem aktuellen Zeitpunkt, der Einzelunterstützungsphasendauer, der Doppelunterstützungsphasendauer, der Vorwärts-Durchschnittsgeschwindigkeit und der ersten Bewegungsschrittlänge in das voreingestellte Gangplanungsmodell; und

Bestimmen, durch das voreingestellte Gangplanungsmodell, der zweiten Bewegungsschrittlänge des zweibeinigen Roboters basierend auf der Vorwärts-Masseschwerpunktposition und der Vorwärtsbewegungsgeschwindigkeit des zweibeinigen Roboters zu dem aktuellen Zeitpunkt, der Einzelunterstützungsphasendauer, der Doppelunterstützungsphasendauer, der Vorwärts-Durchschnittsgeschwindigkeit, der ersten Bewegungsschrittlänge und dem dritten voreingestellten Parameter.

6. Ein computerlesbares Speichermedium, wobei Anweisungen in dem computerlesbaren Speichermedium durch einen Prozessor einer Steuerung ausgeführt werden und es der Steuerung ermöglichen, das Bewegungssteuerungsverfahren gemäß einem der Ansprüche 1 bis 5 durchzuführen.

7. Ein Computerprogrammprodukt, das ein Computerprogramm aufweist, wobei das Bewegungssteuerungsverfahren gemäß einem der Ansprüche 1 bis 5 ansprechend auf das Ausführen des Computerprogramms durch einen Prozessor implementiert wird.

8. Ein zweibeiniger Roboter, der folgende Merkmale aufweist:

einen zweibeinigen Roboterkörper, eine untere Gliedmaßenanordnung und eine Steuerung, wobei die untere Gliedmaßenanordnung und die Steuerung an dem zweibeinigen Roboterkörper angeordnet sind, wobei die Steuerung konfiguriert ist zum:

Erfassen von Gangparametern des zweibeinigen Roboters;
Eingeben der Gangparameter in ein voreingestelltes Gangplanungsmodell;
Bestimmen von Gangbahnparametern des zweibeinigen Roboters basierend auf den Gangparametern durch das voreingestellte Gangplanungsmodell, wobei die Gangbahnparameter einen Masseschwerpunktzustand, der einer Doppelunterstützungsphase entspricht, und einen Masseschwerpunktzustand aufweisen, der einer Einzelunterstützungsphase entspricht, und der Masseschwerpunktzustand eine Masseschwerpunktposition und eine Masseschwerpunktbewegungsgeschwindigkeit aufweist; und
Steuern der unteren Gliedmaßenanordnung des zweibeinigen Roboters, damit sich derselbe gemäß den Gangbahnparametern bewegt,

wobei
die Gangparameter eine Masseschwerpunkthöhe, eine Doppelunterstützungsphasendauer, eine Einzelunterstützungsphasendauer, eine Vorwärts-Durchschnittsgeschwindigkeit und eine Seitwärts-Durchschnittsgeschwindigkeit aufweisen;
der Masseschwerpunktzustand eine Vorwärts-Masseschwerpunktposition und eine Vorwärts-Masseschwerpunktbewegungsgeschwindigkeit aufweist; und
die Gangbahnparameter ferner eine Seitwärts-Schwerpunktbewegungsgeschwindigkeit des zweibeinigen Roboters in einem Einzelunterstützungsphasenbeendigungszustand, eine erste Bewegungsschrittlänge des zweibeinigen Roboters und eine Masseschwerpunkthöhe des zweibeinigen Roboters in einer vertikalen Richtung aufweisen.

9. Der zweibeinige Roboter gemäß Anspruch 8, wobei die Steuerung ferner konfiguriert ist zum:

Eingeben der Masseschwerpunkthöhe und der Doppelunterstützungsphasendauer in das voreingestellte Gangplanungsmodell;
Bestimmen, durch ein Modell, das der Einzelunterstützungsphase in dem voreingestellten Gangplanungsmodell entspricht, der Vorwärts-Masseschwerpunktposition und der Vorwärts-Masseschwerpunktbewegungsgeschwindigkeit des zweibeinigen Roboters in der Einzelunterstützungsphase basierend auf der Masseschwerpunkthöhe und einem ersten voreingestellten Parameter; und
Bestimmen, durch ein Modell, das der Doppelunterstützungsphase in dem voreingestellten Gangplanungsmodell entspricht, der Vorwärts-Masseschwerpunktposition und der Vorwärts-Masseschwerpunktbewegungsgeschwindigkeit des zweibeinigen Roboters in der Doppelunterstützungsphase basierend auf der Doppelunterstützungsphasendauer und einem zweiten voreingestellten Parameter,
wobei der erste voreingestellte Parameter ein Parameter ist, der in einer analytischen Lösung für eine Vorwärts-Masseschwerpunktdynamikgleichung des zweibeinigen Roboters verwendet wird; und
der zweite voreingestellte Parameter ein Parameter ist, der in einer analytischen Lösung für die Vorwärts-Masseschwerpunktdynamikgleichung in der Doppelunterstützungsphase verwendet wird.

10. Der zweibeinige Roboter gemäß Anspruch 8, wobei die Steuerung ferner konfiguriert ist zum:

Eingeben der Einzelunterstützungsphasendauer, der Doppelunterstützungsphasendauer, der Vorwärts-Durchschnittsgeschwindigkeit und der Seitwärts-Durchschnittsgeschwindigkeit in das voreingestellte Gangplanungsmodell;
Bestimmen, durch ein Modell, das der Einzelunterstützungsphase in dem voreingestellten Gangplanungsmodell entspricht, einer Vorwärtsbewegungsgeschwindigkeit und einer Seitwärts-Bewegungsgeschwindigkeit des zweibeinigen Roboters in dem Einzelunterstützungsphasenbeendigungszustand basierend auf der Einzelunterstützungsphasendauer, der Doppelunterstützungsphasendauer, der Vorwärts-Durchschnittsgeschwindigkeit und einem dritten voreingestellten Parameter;
Bestimmen, durch ein Modell, das der Doppelunterstützungsphase in dem voreingestellten Gangplanungsmodell entspricht, der ersten Bewegungsschrittlänge des zweibeinigen Roboters basierend auf der Einzelunterstützungsphasendauer, der Doppelunterstützungsphasendauer und der Vorwärts-Durchschnittsgeschwindigkeit; und
Bestimmen der Masseschwerpunkthöhe als die Masseschwerpunkthöhe des zweibeinigen Roboters in der vertikalen Richtung,
wobei der dritte voreingestellte Parameter ein Parameter ist, der zum Berechnen der Vorwärtsbewegungsgeschwindigkeit in dem Einzelunterstützungsphasenbeendigungszustand verwendet wird.

11. Der zweibeinige Roboter gemäß einem der Ansprüche 8 bis 10, wobei die Steuerung ferner konfiguriert ist zum:

Erfassen einer tatsächlichen Vorwärtsbewegungsgeschwindigkeit und einer tatsächlichen Seitwärts-Bewegungsgeschwindigkeit des zweibeinigen Roboters;
Bestimmen, ob die tatsächliche Vorwärtsbewegungsgeschwindigkeit des zweibeinigen Roboters mit der Vorwärts-Durchschnittsgeschwindigkeit übereinstimmt, und Bestimmen, ob die tatsächliche Seitwärts-Bewegungsgeschwindigkeit mit der Seitwärts-Durchschnittsgeschwindigkeit übereinstimmt;
Bestimmen einer zweiten Bewegungsschrittlänge des zweibeinigen Roboters ansprechend auf das Bestimmen, dass die tatsächliche Vorwärtsbewegungsgeschwindigkeit nicht mit der Vorwärts-Durchschnittsgeschwindigkeit übereinstimmt und/oder dass die tatsächliche Seitwärts-Bewegungsgeschwindigkeit nicht mit der Seitwärts-Durchschnittsgeschwindigkeit übereinstimmt; und
Steuern des zweibeinigen Roboters, damit sich derselbe basierend auf der zweiten Bewegungsschrittlänge bewegt.

**Revendications**

1. Procédé de contrôle de mouvement, comprenant :

l'acquisition de paramètres de marche d'un robot à deux jambes (S101) ;
la saisie de paramètres de marche dans un modèle de planification de marche prédéfini (S102) ;
la détermination de paramètres de trajectoire de marche du robot à deux jambes sur la base des paramètres de marche par l'intermédiaire du modèle de planification de marche prédéfini (S103), dans lequel les paramètres de trajectoire de marche comprennent un état de centre de masse correspondant à une phase d'appui double et un état de centre de masse correspondant à une phase d'appui unique, et l'état de centre de masse comprend une position de centre de masse et une vitesse de déplacement de centre de masse ; et
le contrôle du robot à deux jambes pour qu'il se déplace selon les paramètres de la trajectoire de marche (S104), dans lequel
les paramètres de marche comprennent une hauteur de centre de masse, une durée de phase d'appui double, une durée de phase d'appui unique, une vitesse moyenne vers l'avant, et une vitesse moyenne latérale ;
l'état de centre de masse comprend une position de centre de masse vers l'avant et une vitesse de déplacement de centre de masse vers l'avant ; et
les paramètres de trajectoire de marche comprennent en outre une vitesse de déplacement de centre de masse latérale du robot à deux jambes dans un état de fin de phase d'appui unique, une première longueur de pas de mouvement du robot à deux jambes, et une hauteur de centre de masse du robot à deux jambes dans une direction verticale.

2. Procédé de contrôle de mouvement selon la revendication 1, dans lequel la détermination des paramètres de trajectoire de marche du robot à deux jambes sur la base des paramètres de marche par l'intermédiaire du modèle de planification de marche prédéfini (S103) comprend :

la saisie de la hauteur de centre de masse et de la durée de phase d'appui double dans le modèle de planification de marche prédéfini ;

la détermination, par l'intermédiaire d'un modèle correspondant à la phase d'appui unique dans le modèle de planification de marche prédéfini, de la position de centre de masse vers l'avant et de la vitesse de déplacement de centre de masse vers l'avant du robot à deux jambes dans la phase d'appui unique, sur la base de la hauteur de centre de masse et d'un premier paramètre prédéfini ; et

la détermination, par l'intermédiaire d'un modèle correspondant à la phase d'appui double dans le modèle de planification de marche prédéfini, de la position de centre de masse vers l'avant et de la vitesse de déplacement de centre de masse vers l'avant du robot à deux jambes dans la phase d'appui double sur la base de la durée de phase d'appui double et d'un deuxième paramètre prédéfini,

dans laquelle le premier paramètre prédéfini est un paramètre utilisé dans une solution analytique d'une équation de dynamique de centre de masse vers l'avant du robot à deux jambes ; et

le deuxième paramètre prédéfini est un paramètre utilisé dans une solution analytique de l'équation de dynamique de centre de masse vers l'avant en phase d'appui double.

3. Procédé de contrôle de mouvement selon la revendication 1, dans lequel la détermination des paramètres de trajectoire de marche du robot à deux jambes sur la base des paramètres de marche par l'intermédiaire du modèle de planification de marche prédéfini (S103) comprend :

la saisie de la durée de phase d'appui unique, de la durée de phase d'appui double, de la vitesse moyenne vers l'avant, et de la vitesse moyenne latérale dans le modèle de planification de marche prédéfini ;

la détermination, par l'intermédiaire d'un modèle correspondant à la phase d'appui unique dans le modèle de planification de marche prédéfini, d'une vitesse de déplacement vers l'avant et d'une vitesse de déplacement latérale du robot à deux jambes dans l'état de fin de phase d'appui unique sur la base de la durée de phase d'appui unique, de la durée de phase d'appui double, de la vitesse moyenne vers l'avant, et d'un troisième paramètre prédéfini ;

la détermination, par l'intermédiaire d'un modèle correspondant à la phase d'appui double dans le modèle de planification de marche prédéfini, de la première longueur de pas de mouvement du robot à deux jambes sur la base de la durée de phase d'appui unique, de la durée de phase d'appui double, et de la vitesse moyenne vers l'avant ; et

la détermination de la hauteur de centre de masse en tant que hauteur de centre de masse du robot à deux jambes dans la direction verticale,

dans lequel le troisième paramètre prédéfini est un paramètre utilisé pour calculer la vitesse de déplacement vers l'avant dans l'état de fin de phase d'appui unique.

4. Procédé de contrôle de mouvement selon l'une quelconque des revendications 1 à 3, comprenant en outre :

l'acquisition d'une vitesse de déplacement vers l'avant réelle et d'une vitesse de déplacement latérale réelle du robot à deux jambes ;

la détermination du fait que la vitesse de déplacement vers l'avant réelle du robot à deux jambes est cohérente avec la vitesse moyenne vers l'avant, et la détermination du fait que la vitesse de déplacement latérale réelle est cohérente avec la vitesse moyenne latérale ;

la détermination d'une deuxième longueur de pas de mouvement du robot à deux jambes en réponse à la détermination que la vitesse de déplacement vers l'avant réelle est incohérente avec la vitesse moyenne vers l'avant et/ou que la vitesse de déplacement latérale réelle est incohérente avec la vitesse moyenne latérale ; et

le contrôle du robot à deux jambes pour qu'il se déplace sur la base de la deuxième longueur de pas de mouvement.

5. Procédé de contrôle de mouvement selon la revendication 4, dans lequel la détermination d'une deuxième longueur de pas de mouvement du robot à deux jambes comprend :

l'acquisition d'une position de centre de masse vers l'avant et d'une vitesse de déplacement vers l'avant du robot à deux jambes à un moment actuel ;

la saisie de la position de centre de masse vers l'avant et de la vitesse de déplacement vers l'avant du robot à deux jambes au moment actuel, de la durée de phase d'appui unique, de la durée de phase d'appui double, de la vitesse moyenne vers l'avant, et de la première longueur de pas de mouvement dans le modèle de planification de marche prédéfini ; et

la détermination, par l'intermédiaire du modèle de planification de marche prédéfini, de la deuxième longueur de pas de mouvement du robot à deux jambes sur la base de la position de centre de masse vers l'avant et de la vitesse de déplacement vers l'avant du robot à deux jambes au moment actuel, de la durée de phase d'appui unique, de la durée de phase d'appui double, de la vitesse moyenne vers l'avant, de la première longueur de pas de mouvement, et du troisième paramètre prédéfini.

6. Moyen de stockage lisible par ordinateur, dans lequel les instructions dans le moyen de stockage lisible par ordinateur sont exécutées par un processeur d'un contrôleur et permettent au contrôleur de réaliser le procédé de contrôle de mouvement selon l'une quelconque des revendications 1 à 5.

7. Produit de programme informatique, comprenant un programme informatique, dans lequel le procédé de contrôle de mouvement selon l'une quelconque des revendications 1 à 5 est mis en œuvre en réponse à l'exécution du programme informatique par un processeur.

8. Robot à deux jambes, comprenant :

un corps de robot à deux jambes, un ensemble de membres inférieurs et un contrôleur, l'ensemble de membres inférieurs et le contrôleur étant agencés sur le corps de robot à deux jambes,

dans lequel le contrôleur est configuré pour :

acquérir des paramètres de marche du robot à deux jambes ;

saisir les paramètres de marche dans un modèle de planification de marche prédéfini ;

déterminer des paramètres de trajectoire de marche du robot à deux jambes sur la base des paramètres de marche par l'intermédiaire du modèle de planification de marche prédéfini, dans lequel les paramètres de trajectoire de marche comprennent un état de centre de masse correspondant à une phase d'appui double et un état de centre de masse correspondant à une phase d'appui unique, et l'état de centre de masse comprend une position de centre de masse et une vitesse de déplacement de centre de masse ; et

contrôler l'ensemble de membres inférieurs du robot à deux jambes pour qu'il se déplace selon les paramètres de trajectoire de marche,

dans lequel

les paramètres de marche comprennent une hauteur de centre de masse, une durée de phase d'appui double, une durée de phase d'appui unique, une vitesse moyenne vers l'avant, et une vitesse moyenne latérale ;

l'état de centre de masse comprend une position de centre de masse vers l'avant et une vitesse de déplacement de centre de masse vers l'avant ; et

les paramètres de trajectoire de marche comprennent en outre une vitesse de déplacement de centre de masse latérale du robot à deux jambes dans un état de fin de phase d'appui unique, une première longueur de pas de mouvement du robot à deux jambes, et une hauteur de centre de masse du robot à deux jambes dans une direction verticale.

9. Robot à deux jambes selon la revendication 8, dans lequel le contrôleur est en outre configuré pour :

saisir la hauteur de centre de masse et la durée de phase d'appui double dans le modèle de planification de marche prédéfini ;

déterminer, par l'intermédiaire d'un modèle correspondant à la phase d'appui unique dans le modèle de planification de marche prédéfini, la position de centre de masse vers l'avant et la vitesse de déplacement de centre de masse vers l'avant du robot à deux jambes dans la phase d'appui unique, sur la base de la hauteur de centre de masse et d'un premier paramètre prédéfini ; et

déterminer, par l'intermédiaire d'un modèle correspondant à la phase d'appui double dans le modèle de planification de marche prédéfini, la position de centre de masse vers l'avant et la vitesse de déplacement de centre de masse vers l'avant du robot à deux jambes dans la phase d'appui double sur la base de la durée de phase d'appui double et d'un deuxième paramètre prédéfini,

dans laquelle le premier paramètre prédéfini est un paramètre utilisé dans une solution analytique d'une équation de dynamique de centre de masse vers l'avant du robot à deux jambes ; et

le deuxième paramètre prédéfini est un paramètre utilisé dans une solution analytique de l'équation de dynamique de centre de masse vers l'avant en phase d'appui double.

10. Robot à deux jambes selon la revendication 8, dans lequel le contrôleur est en outre configuré pour :

saisir la durée de phase d'appui unique, la durée de phase d'appui double, la vitesse moyenne vers l'avant, et la vitesse moyenne latérale dans le modèle de planification de marche prédéfini ;

déterminer, par l'intermédiaire d'un modèle correspondant à la phase d'appui unique dans le modèle de planification de marche prédéfini, une vitesse de déplacement vers l'avant et une vitesse de déplacement latérale du robot à deux jambes dans l'état de fin de phase d'appui unique sur la base de la durée de phase d'appui unique, de la durée de phase d'appui double, de la vitesse moyenne vers l'avant, et d'un troisième paramètre prédéfini ;

déterminer, par l'intermédiaire d'un modèle correspondant à la phase d'appui double dans le modèle de planification de marche prédéfini, la première longueur de pas de mouvement du robot à deux jambes sur la base de la durée de phase d'appui unique, de la durée de phase d'appui double, et de la vitesse moyenne vers l'avant ; et

déterminer la hauteur de centre de masse en tant que hauteur de centre de masse du robot à deux jambes dans la direction verticale,

dans lequel le troisième paramètre prédéfini est un paramètre utilisé pour calculer la vitesse de déplacement vers l'avant dans l'état de fin de phase d'appui unique.

11. Robot à deux jambes selon l'une quelconque des revendications 8 à 10, dans lequel le contrôleur est en outre configuré pour :

acquérir une vitesse de déplacement vers l'avant réelle et une vitesse de déplacement latérale réelle du robot à deux jambes ;

déterminer si la vitesse de déplacement vers l'avant réelle du robot à deux jambes est cohérente avec la vitesse moyenne vers l'avant, et déterminer si la vitesse de déplacement latérale réelle est cohérente avec la vitesse moyenne latérale ;

déterminer une deuxième longueur de pas de mouvement du robot à deux jambes en réponse à la détermination que la vitesse de déplacement vers l'avant réelle est incohérente avec la vitesse moyenne vers l'avant et/ou que la vitesse de déplacement latérale réelle est incohérente avec la vitesse moyenne latérale ; et

contrôler le robot à deux jambes pour qu'il se déplace sur la base de la deuxième longueur de pas de mouvement.

| Acquire gait parameters of a two-legged robot | S101 |

| Input the gait parameters to a preset gait planning model | S102 |

| Determine gait trajectory parameters of the two-legged robot based on the gait parameters through the preset gait planning model | S103 |

| Control the two-legged robot to move according to the gait trajectory parameters | S104 |

FIG. 1

FIG. 2

FIG. 3

Motion control apparatus 400

Parameter acquisition module 410

Input module 420

Determination module 430

First motion module 440

FIG. 4

Controller 500

Computing unit 501

ROM 502

RAM 503

504

505

I/O interface

Input unit 506

Output unit 507

Storage unit 508

Communication unit 509

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180004208 A1
- US 5936367 A
- US 20050075755 A1
- US 20070168080 A1
- US 4834200 A
- CN 113050645 A